# EUROPEAN PATENT APPLICATION

(11) **EP 0 675 156 A1**
(43) Date of publication of application: **04.10.1995**
(21) Application number: 95104250.6
(22) Date of filing: 23.03.1995
(51) Int. Cl.: C08J 7/04, B64C 1/14

(54) **Adhesion of polyurethane liner to stretched acrylic substrates**

(30) Priority: 29.03.1994 US 219336
(71) Applicant: PPG INDUSTRIES, INC., Pittsburgh Pennsylvania 15272 (US)
(72) Inventor: Rukavina, Thomas G., Lower Burrell, Pennsylvania 15068 (US); Slobodnik, John B., New Kensington, Pennsylvania 15068 (US)
(74) Representative: Sternagel, Hans-Günther, Dr.

(57) **Abstract**

The purpose of the present invention is to provide novel primer compositions for use in bonding a thermoset polyurethane film to the surface of a polymeric substrate. The novel primer composition of the invention is an elastomeric polymer, particularly polyvinylpyrrolidinone, or a copolymer comprising vinylpyrrolidinone and butyl acrylate. The construction of the article of the present invention comprises a transparent polymeric substrate, such as stretched acrylic, a primer layer of polyvinylpyrrolidinone or copolymer of vinylpyrrolidinone and butyl acrylate on a surface thereof, and a film of thermoset polyurethane on the primer layer. The polyurethane is preferably a reaction product of isocyanate and a polyol such as hexanediol carbonate polyol, cyclohexanedimethanol carbonate polyol, phthalate ester polyol, and hexanediol/cyclohexanedimethanol carbonate polyol. The effect of the primer composition of the present invention is to provide adequate adhesion of the thermoset polyurethane film to the polymeric substrate, such as stretched acrylic. The resulting article is particularly useful as an aircraft cabin window.

## Description

### BACKGROUND OF THE INVENTION

This invention relates generally to the art of laminated transparencies, and more particularly to the art of plastic transparencies comprising plastic substrates, most particularly to the art of bonding thermoset polyurethane films to plastic substrates, especially stretched acrylic, for aircraft transparencies.

U.S. Patent Nos. 4,554,319; 4,609,703 and 4,670,350 to Rukavina disclose novel copolymers of acrylic acid and cyanoethylacrylate, including terpolymers of acrylic acid and cyanoethylacrylate, useful as primers for bonding metal-containing coatings to organic polymer substrates.

It is the object of the invention to provide a primer layer on polymeric substrates which improves the adhesion of a thermoset polyurethane film, deposited thereon to form a laminate comprising a transparent polymeric substrate and a thermoset polyurethane layer.

This object is obtained by an article of manufacture comprising:
a. a transparent polymeric substrate;
b. disposed on a surface of said substrate a primer layer comprising polyvinylpyrrolidinone or a copolymer of vinylpyrrolidone and butylacrylate; and
c. a thermoset polyurethane film deposited on said primer layer.

The present invention comprises novel primer compositions to bond a thermoset polyurethane film to a surface of a polymeric substrate. The present invention provides primers comprising polymers such as polyvinylpyrrolidone or copolymers thereof which promote adhesion of thermoset polyurethane films on polymer substrates, such as stretched acrylic, for use as transparencies, particularly in aircraft.

The solution includes also a method of making a laminated article comprising the steps of:
a. depositing a primer layer of polyvinylpyrrolidinone or of a copolymer of vinylpyrrolidone and butylacrylate on a surface of a stretched acrylic substrate;
b. casting on said primer layer a polyurethane reaction mixture; and
c. curing said polyurethane to form a thermoset polyurethane film.

The primer layer may be formed by applying a solution of vinylpyrrolidone and butylacrylate monomers comprising an initiator is applied onto the surface of the substrate and is copolymerized to form the primer layer, the monomers, vinylpyrrolidone and butylacrylate may be used in mole ratios from 0,9:1 to 1,75:1.

The in-situ polymerization of the monomer mixture applied onto substrate may be affected by UV-radiation or electron radiation in the presence of an initiator, preferably a photoinitiator.

The polymeric substrate primed with the compositions of the present invention is preferably a transparent material suitable for forming laminates which may be used as transparencies in aircraft. A preferred polymer substrate for aircraft transparencies is stretched acrylic.

The thermoset polyurethane film is preferably a transparent thin liner laminated to the exposed surface of a transparency.

The primer of the present invention is disposed at the interface of the plastic substrate and a thermoset polyurethane film to provide adequate adhesion of the thermoset polyurethane film to the plastic substrate. The primer of the present invention is an elastomeric polymer, preferably a polyvinylpyrrolidinone. Preferably, the molecular weight of polyvinylpyrrolidinone is about 40,000. The primer composition preferably comprises an organic solvent. The primer is preferably applied to the substrate surface as a solution by dip, spin, spray, flow or other conventional application technique. The organic solvent is then evaporated and the primer cured at slightly elevated temperature. The solvent may be 1-butanol, cyclohexanone, acetone, mixtures of such solvents, and is preferably n-butanol. The solution preferably comprises about 10 percent polymer. A preferred method of applying the primer is flow coating onto a plastic substrate surface, drying and curing at elevated temperature, typically about 180°F (about 82°C). The thickness of the primer is preferably in the range of about 0.01 to 0.50 microns, more preferably about 0.29 to 0.46 microns for optimum adhesion. The polyurethane composition is then preferably cast and cured on the primer coated stretched acrylic substrate surface. The primer of the present invention promotes adhesion of thermoset polyurethane films on stretched acrylic.

The present invention will be further understood from the descriptions of specific examples which follow:

### EXAMPLE 1

A solution was prepared comprising 2.5 grams of polyvinylpyrrolidinone (molecular weight of 40,000) and 22.5 grams of butanol. The polymer solution was then applied to a sheet of stretched acrylic plastic using a flow coating method. The solvent was evaporated at 82°C for one hour to yield a high optical quality primed plastic sheet. A thermosetting polyurethane composition was cast onto the primed plastic and cured at 82°C for 18 hours. Adhesion was sufficiently high to cause cohesive failure of the polyurethane having a 90° peel test at ambient temperature. The resulting composite was subsequently formed to the shape of an aircraft cabin window which exhibited excellent optics. Soaking the composite in water for 24 hours, however, indicated less water resistance than desired for the primer.

### EXAMPLE 2

A solution was prepared comprising 13.93 grams of vinylpyrrolidinone and 16.07 grams of butyl acrylate. Nine drops of diethoxyacetophenone were added as initiator. The mixture was flow coated onto a plastic substrate and cured with a UV light source for several minutes. A thermosetting polyurethane was cast and cured on the primed plastic. 90° peel tests yielded cohesive failure of the polyurethane. Water-resistance is much improved over that of Example 1.

### EXAMPLE 3

A solution was prepared comprising 19.02 grams of vinylpyrrolidinone and 10.98 grams of butyl acrylate. To this mixture 9 drops of diethoxyacetophenone were added as initiator. The mixture was flow coated onto stretched acrylic plastic and UV-cured. A thermosetting polyurethane was cast and cured on the primed plastic. 90° peel tests yields cohesive failure of the polyurethane. Water-resistance is better than in Examples 1 and 2.

The above examples are offered to illustrate the present invention without limiting its scope, the scope of which is defined by the following claims. Various other materials and process conditions may be used. For example, while the examples utilize polyvinylpyrrolidinone, other polymers could be used. Other polymer substrates, as well as other polyurethane compositions, may also be used in the transparencies of the present invention, the scope of which is defined by the following claims.

## Claims

1. An article of manufacture comprising:
a. a transparent polymeric substrate;
b. disposed on a surface of said substrate a primer layer comprising polyvinylpyrrolidinone or a copolymer of vinylpyrrolidone and butylacrylate; and
c. a thermoset polyurethane film deposited on said primer layer.

2. An article according to claim 1, wherein said polymeric substrate is stretched acrylic.

3. An article according to claim 2, wherein said primer is polyvinylpyrrolidinone having a molecular weight of about 40,000.

4. An article according to claim 1, wherein said polyurethane is a reaction product of isocyanate with a polyol selected from the group consisting of hexanediol carbonate polyol, cyclohexanedimethanol carbonate polyol, phthalate ester polyol and hexanediol/cyclohexanedimethanol carbonate polyol.

5. An article according to claim 1, wherein said polyurethane is a reaction product of isocyanate with a polyol selected from the group consisting of hexanediol carbonate polyol, cyclohexanedimethanol carbonate polyol and mixtures thereof.

6. A method of making a laminated article comprising the steps of:
a. depositing a primer layer of polyvinylpyrrolidinone or of a copolymer of vinylpyrrolidone and butylacrylate on a surface of a stretched acrylic substrate;
b. casting on said primer layer a polyurethane reaction mixture; and
c. curing said polyurethane to form a thermoset polyurethane film.

7. The method according to claim 6, wherein said primer layer is deposited by applying a solution of polyvinylpyrrolidinone to the stretched acrylic surface and evaporating solvent.

8. The method according to claim 7, wherein said solvent is n-butanol.

9. The method according to any of claims 6 to 8, wherein said polyvinylpyrrolidinone has a molecular weight of about 40,000.

10. The method of claim 6, wherein a solution of vinylpyrrolidone and butylacrylate monomers comprising an initiator is applied onto the surface of the substrate and is copolymerized to form the primer layer.

11. A method according to claim 6, wherein said polyurethane reaction mixture comprises isocyanate and a polyol selected from the group consisting of hexanediol carbonate polyol, cyclohexanedimethanol carbonate polyol, phthalate ester polyol, and hexanediol/cyclohexanedimethanol carbonate polyol and mixtures thereof.

12. Use of the article of any of claims 1-5 as aircraft transparency.
